# EUROPÄISCHE PATENTSCHRIFT

(11) **EP 1 772 330 B1**
(45) Veröffentlichungstag und Bekanntmachung des Hinweises auf die Patenterteilung: **19.11.2008**
(21) Anmeldenummer: 06121972.1
(22) Anmeldetag: 09.10.2006
(51) Int. Cl.: B60R 21/231

(54) **Gassack für ein Airbagmodul eines Kraftfahrzeugs**
Airbag for an airbag module of a motor vehicle
Sac à gaz pour le module airbag d'un véhicule à moteur

(30) Priorität: 10.10.2005 DE 102005049218
(43) Veröffentlichungstag der Anmeldung: 11.04.2007
(73) Patentinhaber: Takata-Petri AG, 63743 Aschaffenburg (DE)
(72) Erfinder: Feller, Jens, 89171, Illerkirchberg (DE); Groß, Michael, 89134, Blaustein (DE)
(74) Vertreter: Baumgärtel, Gunnar

(56) Entgegenhaltungen:
- EP-A1- 0 633 168
- EP-A1- 0 812 736
- EP-A2- 1 273 486
- WO-A-00/20260
- WO-A-98/36947
- DE-A1- 19 731 729
- DE-A1- 19 752 629
- DE-A1- 19 848 592
- DE-U1- 29 804 611
- US-A- 5 310 216
- US-A1- 2003 222 446
- US-A1- 2005 110 244
- US-B1- 6 543 803

## Beschreibung

Die Erfindung betrifft einen Gassack für ein Airbagmodul eines Kraftfahrzeugs nach dem Oberbegriff des Patentanspruchs 1.

Ein derartiger Gassack umfasst unter anderem eine Gassackhülle, die einen mit Gas befüllbaren Innenraum des Gassackes umschließt und die durch mindestens zwei (im nicht aufgeblasenen Zustand des Gassackes aufeinander liegende) entlang ihres umlaufenden äußeren Randes miteinander verbundene Gassackteile (Gassacklagen) gebildet wird, sowie eine Einführöffnung der Gassackhülle, durch die hindurch eine innerhalb des Gassackes anordenbare Baugruppe des Airbagmoduls in den Innenraum des Gassackes einführbar ist und die durch eine Unterbrechung der Verbindung zwischen den beiden Gassackteilen gebildet wird, so dass die beiden Gassackteile je einen Randabschnitt der Einführöffnung bilden.

Bei der im Innenraum des Gassackes angeordneten, durch die Einführöffnung einführbaren Baugruppe des Airbagmoduls kann es sich um einen Gasgenerator handeln, mit dem Gas zum Aufblasen des Gassackes freisetzbar ist, oder um einen Gassackhalter, der innerhalb des Gassackes angeordnet ist, um den Gassack mechanisch an einen außerhalb des Gassackes angeordneten Gasgenerator oder an ein Modulgehäuse des Airbagmoduls anzukoppeln, oder um eine sonstige formstabile Baugruppe, die zur Bildung eines Airbagmoduls im Inneren des Gassackes angeordnet wird.

Nach dem Einbringen der genannten Baugruppe in den Innenraum des Gassackes muss die hierfür vorgesehene Einführöffnung verschlossen werden, so dass bei einem eventuellen späteren Befüllen des Gassackes mit Gas - zur Bildung eines Gaskissens in einem Crash-Fall - ein frühzeitiges Austreten des zum Aufblasen des Gassackes vorgesehenen Gases durch die Einführöffnung vermieden oder minimiert wird. Hierzu ist es bekannt, die Einführöffnung mit einer zusätzlichen Gewebelage zu überdecken, die anschließend mit den beiden (bevorzugt durch je ein Gewebeteil gebildeten) Gassackteilen verbunden wird. Es sind also zum Verschließen der Einführöffnung für die innerhalb des Gassackes anzuordnende Baugruppe ein zusätzliches Verschlusselement sowie Verbindungsmittel zur Anbindung des Verschlusselementes an die Gassackhülle erforderlich. Das Verschlusselement wird insbesondere durch zwei Laschen gebildet, die jeweils von einem Randabschnitt der Einführöffnung abstehen.

Aus der EP 1 273 486 A2 ist ein gattungsgemäßer Gassack in Form eines Gassackes für ein Seitenairbagmodul eines Kraftfahrzeugs bekannt, bei dem zwei von Randabschnitten einer Einführöffnung des Gassackes abstehende Laschen aus einem flexiblen Material flächig aneinander anliegen.

In der WO 00/20260 A1 ist ein weiterer Gassack mit flächig aneinander anliegenden flexiblen Laschen beschrieben, die beidseits einer Einführöffnung des Gassackes ausgebildet sind.

Aus der EP 0 812 736 A1, der US 2005/0110244 A1, der DE 197 52 629 A1 und der US-A 5,310,216 sind weitere Gassäcke für Airbagmodule eines Kraftfahrzeugs mit Einführöffnung bekannt.

Der Erfindung liegt das Problem zugrunde, einen Gassack für ein Airbagmodul der eingangs genannten Art zu schaffen, der sich durch eine einfach verschließbare Einführöffnung für eine innerhalb des Gassackes anzuordnende Baugruppe auszeichnet.

Dieses Problem wird erfindungsgemäß durch die Schaffung eines Gassackes mit den Merkmalen des Patentanspruchs 1 gelöst.

Danach sind die beiden Laschen jeweils aus zumindest einem flexiblen Materialabschnitt gebildet, wobei der mindestens eine Materialabschnitt der einen Lasche in einem flach ausgebreiteten Zustand deckungsgleich bezüglich des mindestens einen Materialabschnitts der anderen Lasche ausgebildet ist.

Die jeweilige Lasche ist vorzugsweise derart um die innerhalb des Gassackes angeordnete Baugruppe herumgelegt, dass die jeweilige Lasche die besagte Baugruppe zumindest teilweise umgreift und die beiden Laschen hierbei (zumindest entlang der Einführöffnung) überlappen bzw. einander überdecken.

Ferner sind die beiden Gassackteile durch je mindestens eine erste Gewebelage gebildet, wobei der mindestens eine Materialabschnitt der jeweiligen Lasche vorzugsweise jeweils einstückig mit einer ersten Gewebelage ausgebildet ist. Hierbei ist der Materialabschnitt einer Lasche beispielsweise an die entsprechende erste Gewebelage angewebt.

Die beiden ersten Gewebelagen sind vorzugsweise derart ausgebildet, dass sie in einem flach ausgebreiteten (faltenfreien) Zustand eine Kontur identischer Form aufweisen, d.h., die beiden Gewebelagen sind in dem besagten Zustand deckungsgleich ausgebildet.

Außerdem weisen die Gassackteile je eine zweite Gewebelage auf, die jeweils vor einer dem Innenraum der Gassackhülle zugewandten Innenseite einer ersten Gewebelage anliegt. Derartige zweite Gewebelagen dienen u. a. zum Verstärken der Gassackhülle, insbesondere im Bereich der Einführöffnung bzw. des an der Einführöffnung im Innenraum der Gassackhülle angeordneten Gasgenerators. So kann beispielsweise bei einem Heißgasgenerator die Gefahr einer Beschädigung der Gassackhülle aufgrund der beim Aufblasen des Gassackes freigesetzten heißen Gase durch ein zweilagiges Ausbilden der Gassackhülle im Bereich des Gasgenerators vermindert werden. Bevorzugt sind die zweiten Gewebelagen - bezogen auf einen flach ausgebreiteten Zustand - zueinander kongruent ausgebildet.

Weiterhin weist die dem jeweiligen Gassackteil zugeordnete Lasche einen Materialbereich der zweiten Gewebelagen auf, wobei der Materialabschnitt jeder der beiden Lasche derart gefaltet ist, dass er den Materialbereich der zweiten Gewebelage der jeweiligen Lasche umgreift, d.h. der Materialbereich der zweiten Gewebelage bildet eine Zwischenlage der jeweiligen (dreilagigen) Lasche.

Somit werden durch die Faltung des Materialabschnittes einer jeweiligen Lasche beidseitig des Materialbereiches der zweiten Gewebelage angeordnete Abschnitte des Materialabschnittes gebildet, die (mittels einer Naht) am Materialbereich der zweiten Gewebelage festgelegt sind. Die Naht verläuft vorzugsweise entlang der Einführöffnung, d.h., entlang des jeweiligen Randabschnittes.

In einem Ausführungsbeispiel der Erfindung sind die beiden Laschen - bezogen auf einen flach ausgebreiteten Zustand der Gassackhülle - spiegelsymmetrisch zueinander angeordnet und ausgebildet.

Bei der erfindungsgemäßen Lösung liegt die Einführöffnung zwischen mindestens zwei Gassackteilen bzw. Gassacklagen, insbesondere in Form von Gewebelagen, wobei die Ausdehnung der Öffnung dadurch begrenzt ist, dass sich an die Öffnung jeweils Bereiche der Gassackhülle anschließen, in denen die beiden Gassackteile entlang ihres äußeren Randes miteinander verbunden sind. Geeignete Verbindungsmittel zur Verbindung der Gassackteile sind z. B. Nähte, Klebemittel, Niete oder dergleichen. Mit anderen Worten ausgedrückt, wird die Einführöffnung gebildet durch eine Unterbrechung der Verbindung zwischen den beiden Gassackteilen, so dass die Einführöffnung durch je einen Randabschnitt der beiden Gassackteile begrenzt ist.

An dem entsprechenden Randabschnitt weist jedes der beiden Gassackteile eine vom Rand des entsprechenden Gassackteiles abstehende Lasche auf, die um die durch die Einführöffnung in das Innere des Gassackes einzuführende und dort anzuordnende Baugruppe derart herumgelegt werden kann, dass die beiden Laschen einander überlappen, wobei mindestens eine der Laschen mit der innerhalb des Gassackes angeordneten Baugruppe verbunden wird.

Bei der erfindungsgemäßen Lösung wird demnach die Einführöffnung des Gassackes nicht durch ein separates zusätzliches Gewebeteil verschlossen, sondern vielmehr durch unmittelbar an den die Gassackhülle bildenden Gassackteilen vorgesehene, bevorzugt einstückig mit diesen Gassackteilen ausgebildete Laschen.

Eine derartig verschlossene Einführöffnung eines Gassackes führt zu minimalen Druckverlusten im Bereich der Einführöffnung beim Aufblasen des Gassackes und gestattet die Verwendung desselben Gassacktypes für Fahrerairbags einerseits und Beifahrerairbags andererseits.

Die beiden Laschen sind bevorzugt derart in entgegengesetzter Richtung zumindest teilweise um die innerhalb des Gassackes angeordnete Baugruppe herumgelegt, dass im Überlappungsbereich der beiden Laschen die eine Lasche die andere Lasche zumindest teilweise überdeckt, so dass diese andere Lasche sich zwischen der einen Lasche und der besagten Baugruppe erstreckt. In diesem Fall ist vorteilhaft zumindest die eine, äußere Lasche an der Baugruppe festgelegt, so dass hierdurch zugleich die andere, innere Lasche zwischen der Baugruppe und der äußeren Lasche gehalten wird.

Die Anordnung und Ausbildung der beiden Laschen ist bevorzugt derart, dass zum Verschließen der Einführöffnung eine Lasche die Einführöffnung auf der dem Innenraum des Gassackes abgewandten Außenseite der Gassackhülle überdeckt und die andere Lasche durch die Einführöffnung in den Innenraum des Gassackes geführt ist, wo sie sich auf der Innenseite der Gassackhülle vor der Einführöffnung erstreckt.

Zur Festlegung mindestens einer der Laschen an der innerhalb des Gassackes angeordneten Baugruppe ist bevorzugt ein von dieser Baugruppe abstehendes Montageelement vorgesehen, das eine Montageöffnung in jener Lasche durchgreift. Bei dem Montageelement kann es sich insbesondere um einen Montagebolzen handeln, und es weist vorteilhaft an dem der Baugruppe abgewandten freien Ende eine Verbreiterung auf, mit der es den Rand der zugeordneten Montageöffnung der entsprechenden Lasche hintergreifen kann. Gemäß einer besonders vorteilhaften Ausführungsform der Erfindung ist eine der beiden Laschen (vorteilhaft die im Überlappungsbereich oben liegende Lasche) an der innerhalb des Gassackes angeordneten Baugruppe festgelegt, während das Gassackteil, an dem die andere der beiden Laschen (welche im Überlappungsbereich zwischen der einen Lasche und der Baugruppe liegt) vorgesehen ist, außerhalb jener anderen Lasche an der besagten Baugruppe festgelegt wird, z. B. wiederum über einen von der Baugruppe abstehenden Montagebolzen der in eine Montageöffnung jenes Gassackteiles eingreift. Bevorzugt dienen dabei ein und dieselben Montageelemente der innerhalb des Gassackes angeordneten Baugruppe einerseits zur Festlegung der einen Lasche und andererseits zur Festlegung des Gassackteiles, an dem die andere Lasche angeordnet ist.

Vorteilhaft erstreckt sich jede der beiden Laschen jeweils entlang des gesamten Randabschnittes des zugehörigen Gassackteiles, so dass im Wesentlichen der gesamte Rand der Einführöffnung durch die beiden Laschen begrenzt ist und die beiden einander überlappenden Laschen die Einführöffnung verschließen. Hierbei kann allerdings ein kleiner Durchgang für ein Verbindungskabel freigelassen werden, etwa um eine innerhalb des Gassackes angeordnete Baugruppe in Form eines Gasgenerators zur Zündung desselben mit elektrischem Strom versorgen zu können.

Nach einer anderen Ausführungsform der Erfindung wird die Einführöffnung durch die einander überlappenden Laschen nur teilweise verschlossen, so dass eine Teilöffnung frei bleibt, durch die hindurch die innerhalb des Gassackes angeordnete Baugruppe, z. B. ein Gasgenerator, mit einem Abschnitt aus dem Innenraum des Gassackes hinausragen kann. Dies gestattet beispielsweise eine elektrische Kontaktierung eines Gasgenerators außerhalb des Gassackes.

Die beiden Randabschnitte der Einführöffnung sind bevorzugt einander gegenüberliegend angeordnet und können hierbei auch spiegelsymmetrisch gestaltet sein. Die jeweilige Lasche kann hierbei zum einen einstückig an dem zugehörigen Gassackteil angeformt sein, also insbesondere mit einem Gassackteil in Form eines Gewebeteiles eine einheitliche Gewebelage bilden. Nach einer anderen Ausführungsform der Erfindung werden die beiden Laschen durch separate Teile gebildet, die am jeweils zugeordneten Gassackteil, z. B. durch Nähen oder in sonstiger Weise, festgelegt sind.

Bei den mindestens zwei Gassackteilen, die die mit der Einführöffnung versehene Hülle des Gassackes bilden, kann es sich einerseits um zwei separate Gassackteile handeln, die - außerhalb der Einführöffnung - entlang ihres äußeren Randes durchgängig unter Verwendung zusätzlicher Verbindungsmittel, wie z. B. durch Nähen, Verweben oder Kleben, miteinander verbunden sind. Andererseits können die beiden Gassackteile auch Bestandteil eines einzelnen flächigen Gassackzuschnitts (Gewebezuschnitts) sein, der vorzugsweise symmetrisch bezüglich einer Spiegelachse ausgebildet ist. Zur Bildung der Gassackhülle wird der Gassack- bzw. Gewebezuschnitt um die Spiegelachse geklappt, so dass hierdurch zwei aufeinander liegende Gassackteile (Gewebelagen) gebildet werden. Diese sind entlang der Spiegelachse einstückig miteinander verbunden und werden nur an ihren übrigen, aneinander anliegenden Randbereichen durch zusätzliche Verbindungsmittel, wie z. B. eine Naht oder Klebemittel, aneinander befestigt. Die Einführöffnung kann dabei einerseits als Unterbrechung in dem Randbereich vorgesehen sein, in dem die beiden Gassackteile einstückig miteinander verbunden sind, oder sie kann in einem der Randbereiche vorgesehen sein, in dem die beiden Gassackteile durch zusätzliche Verbindungsmittel miteinander verbunden sind.

In einer Variante der Erfindung weisen die beiden Laschen je mindestens eine erste Montageöffnung auf, wobei die Montageöffnungen in einem flach ausgebreiteten Zustand der Gassackhülle zueinander deckungsgleich ausgebildet sind.

Weiterhin weisen die beiden Gassackteile außerhalb der Laschen je mindestens eine zweite Montageöffnung auf, wobei die Montageöffnungen in einem flach ausgebreiteten Zustand der Gassackhülle ebenfalls zueinander deckungsgleich ausgebildet sind.

Bevorzugt wird die eine Lasche des einen Gassackteiles zum Verschließen der Einführöffnung über die andere Lasche des anderen Gassackteiles gelegt, wobei die mindestens eine erste Montageöffnung der Lasche des einen Gassackteiles deckungsgleich auf der mindestens einen zweiten Montageöffnung des anderen Gassackteiles zu liegen kommt, so dass die beiden Montageöffnungen zum Verschließen der Einführöffnung von einem Montageelement, insbesondere einem von einem Gasgenerator abstehenden Bolzen, durchgriffen werden können.

Weitere Einzelheiten und Vorteile der Erfindung werden bei der nachfolgenden Beschreibung von Ausführungsbeispielen anhand der Figuren deutlich werden.

Es zeigen:
- Fig. 1a: eine Ansicht eines Gassackes für ein Airbagmodul mit einer Einführöffnung für einen Gasgenerator, die durch zwei am Gassack angeordnete Laschen verschließbar ist;
- Fig. 1b: einen Querschnitt durch den Gassack aus Figur 1 im Bereich der Einführöffnung;
- Fig. 2: den Gassack aus den Figuren 1a und 1b beim Einführen eines Gasgenerators;
- Fig. 3: den Gassack aus den Figur 2 nach dem Einführen des Gasgenerators und Herumführen einer Lasche um den Gasgenerator;
- Fig. 4a: den Gassack aus Figur 3 zusammen mit dem eingeführten Gasgenerator nach dem Herumführen der zweiten Lasche um den Gasgenerator;
- Fig. 4b: einen Querschnitt durch die Anordnung aus Figur 4a;
- Fig. 5: einen Gassack gemäß Figur 1a zusammen mit einem elektrischen Verbindungskabel zum Anschließen eines Gasgenerators;
- Fig. 6: den Gassack aus Figur 5 zusammen mit einem in den Gassack eingeführten Gasgenerator;
- Fig. 7a: eine Abwandlung der Anordnung aus Figur 6;
- Fig. 7b: einen Querschnitt durch die Anordnung aus Figur 7a;
- Fig. 8a: eine Gassackzuschnitt in Form einer flächig ausgebreiteten Gassackplatte zur Bildung eines Gassackes mit einer Einführöffnung;
- Fig. 8b: die Gassackplatte aus Figur 8a mit einer hieran angeordneten ersten Lasche zum Verschließen der Einführöffnung;
- Fig. 8c: die Gassackplatte aus Figur 8b mit einer zusätzlichen zweiten Lasche zum Verschließen der Einführöffnung;
- Fig. 8d: eine erste Ansicht der Gassackplatte aus Figur 8c nach Bildung einer Gassackhülle hieraus;
- Fig. 8e: eine zweite Ansicht der Gassackplatte aus Figur 8c nach Bildung einer Gassackhülle hieraus;
- Fig. 9a: eine Abwandlung der Gassackplatte aus den Figuren 8a bis 8c;
- Fig. 9b: eine erste Ansicht der Gassackplatte aus Figur 9a nach Bildung einer Gassackhülle hieraus;
- Fig. 9c: eine zweite Ansicht der Gassackplatte aus Figur 9a nach Bildung einer Gassackhülle hieraus;
- Fig. 10: eine schematische Schnittansicht eines Gassackes für ein Airbagmodul mit einer Einführöffnung für einen Rohrgasgenerator sowie von der Einführöffnung abstehenden Laschen zum Verschließen der Einführöffnung.

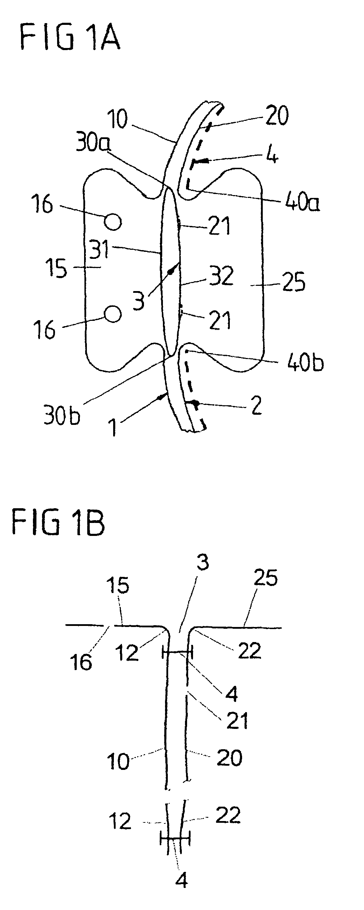

In den Figuren 1a und 1b ist ein Ausschnitt eines Gassackes für ein Airbagmodul eines Kraftfahrzeugs dargestellt, der in einem Crash-Fall zum Schutz eines Fahrzeuginsassen zur Bildung eines Gaskissens mit Gas befüllbar ist.

Zur Anordnung in einem Kraftfahrzeug wird ein derartiger Gassack gefaltet, so dass er sich als kompaktes Gassackpaket zum Beispiel an einem Lenkrad (im Fall eines Fahrerairbags) oder hinter einer Armaturentafel (im Fall eines Beifahrerairbags) unterbringen lässt. Weiterhin kann ein Gassack der gezeigten Art beispielsweise im gefalteten Zustand als Seitenairbag in einen Fahrzeugsitz oder eine Fahrzeugtür integriert sein; oder er kann als Kopfairbag hinter dem Dachhimmel eines Kraftfahrzeugs angeordnet sein.

Wird ein zu einem Gassackpaket zusammengefalteter Gassack in einem Crash-Fall mit Gas befüllt, so entfaltet sich der Gassack und tritt aus dem Lenkrad bzw. der Armaturentafel in Richtung auf den Innenraum des entsprechenden Kraftfahrzeugs aus, wo er dann ein Gaskissen zum Schutz eines Fahrzeuginsassen bildet.

In den Figuren 1a und 1b ist der Gassack im ungefalteten Zustand dargestellt, das heißt, bevor er zur Einbringung in ein Kraftfahrzeug zu einem Gassackpaket zusammengestaucht wird. Gemäß den Figuren 1a und 1b wird der Gassack gebildet durch zwei Gassackteile 1, 2 in Form je einer Gewebelage 10 bzw. 20, die entlang ihres jeweiligen äußeren Randes durch eine Naht 4 miteinander verbunden sind. Anstelle der Bildung einer Naht 4 zur Verbindung der beiden Gassackteile 1, 2 in Form von Gewebelagen 10, 20 können auch andere Verbindungstechniken, wie zum Beispiel Kleben oder Nieten, zur Anwendung kommen. Ferner muss es sich bei den Gassackteilen 1, 2 nicht zwingend um Gewebelagen 10, 20 handeln. Von Bedeutung ist allein, dass die beiden Gassackteile 1, 2 durch je ein flexibles, flächiges Teil (d.h. eine flexible Gassacklage) gebildet werden, die sich entlang ihres jeweiligen Randes derart ineinander verbinden lassen, dass sie einen mit Gas befüllbaren Innenraum umschließen, also eine Gassackhülle bilden, die sich mit Gas befüllen lässt und hierbei die Gestalt eines Gaskissens zum Schutz eines Fahrzeuginsassen annehmen kann.

Anhand der Figuren 1a und 1b ist ferner erkennbar, dass die Naht 4, über die die beiden Gassackteile 1, 2 in Form von Gewebelagen 10, 20 miteinander verbunden sind, eine Unterbrechung aufweist, entlang der zwischen den beiden Gassackteilen 1, 2 eine Einführöffnung 3 ausgebildet ist, durch die hindurch eine im Innenraum des Gassackes anzuordnende Baugruppe, wie zum Beispiel ein Gasgenerator, in das Innere des Gassackes eingeführt werden kann. Die Einführöffnung 3 erstreckt sich schlitzartig zwischen einem ersten Ende 30a und einem zweiten Ende 30b, die jeweils mit einer der beiden Stellen 40a, 40b zusammenfallen, an denen die Verbindungsnaht 4 der beiden Gassackteile 1, 2 unterbrochen ist. Mit anderen Worten ausgedrückt, weist die entlang des Randes der beiden Gassackteile 1, 2 umlaufende Verbindungsnaht 4 zwei freie Enden 40a, 40b auf, so dass die Naht 4 einen offenen Ring bildet und zwischen den beiden freien Enden 40a, 40b unterbrochen ist. In dem Bereich zwischen den beiden freien Enden 40a, 40b der Naht 4 sind die beiden Gassackteile 1, 2 nicht miteinander verbunden, so dass hier eine schlitzförmige Einführöffnung 3 entsteht, die sich zwischen einem ersten Ende 30a und einem zweiten Ende 30b erstreckt und die an ihren beiden Längsseiten jeweils durch einen Randabschnitt 31 bzw. 32 berandet ist, die spiegelsymmetrisch zueinander ausgebildete sind. Dabei bildet der eine Randabschnitt 31 einen Bestandteil des ersten Gassackteiles 1 bzw. der entsprechenden Gewebelage 10 und der zweite, gegenüberliegende Randabschnitt 32 einen Bestandteil des anderen Gassackteiles 2 bzw. der entsprechenden Gewebelage 20.

Entlang jedes der beiden Randabschnitte 31, 32 der Einführöffnung 3 ist am zugeordneten Gassackteil 1 und 2 eine Lasche 15 bzw. 25 einstückig angeformt, also vorliegend an der jeweiligen Gewebelage 10 bzw. 20 angewebt, die vom Rand 12 bzw. 22 des entsprechenden Gassackteiles 1 bzw. 2 absteht. Die beiden Laschen 15, 25 erstrecken sich jeweils im Wesentlichen entlang des gesamten zugehörigen Randabschnittes 31 bzw. 32, so dass die Einführöffnung 3 durch jede der beiden vorliegend trapezförmigen Laschen 15, 25 auf ihrer gesamten Länge zwischen den beiden Enden 30a, 30b überdeckbar ist. Ein kürzere Seite der jeweiligen trapezförmigen Lasche 15, 25 bildet dabei den zugehörigen Randabschnitt 31 bzw. 32 der Einführöffnung 3 und eine gegenüberliegende, längere Seite der jeweiligen trapezförmigen Lasche 15, 25 ist der Einführöffnung 3 abgewandt.

Zudem sind in der Lasche 15 des einen Gassackteiles 1 sowie in dem anderen Gassackteil 2 außerhalb der Lasche 25 jeweils zwei Montageöffnungen 16 bzw. 21 ausgebildet, die der Befestigung eines innerhalb des Gassackes anzuordnenden Gasgenerators dienen.

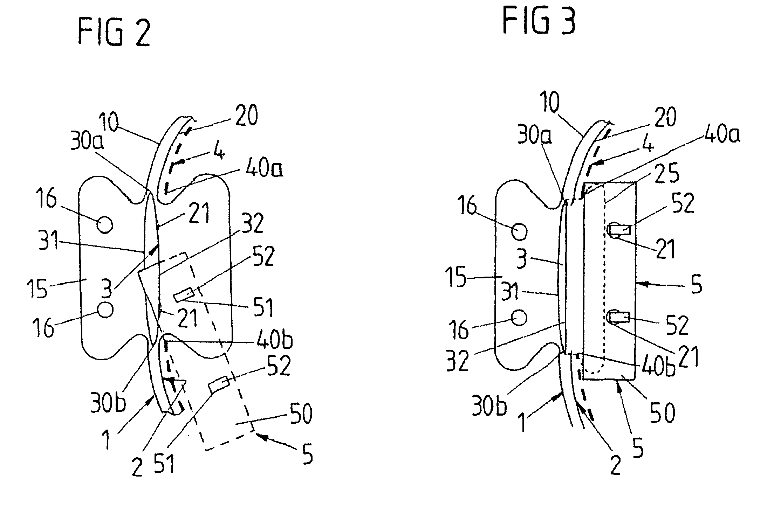

Figur 2 zeigt den Gassack aus Figur 1 zusammen mit einem Gasgenerator 5, der durch die Einführöffnung 3 in Form eines Einführschlitzes hindurch in den zwischen den beiden Gassackteilen 1, 2 bzw. zwischen den entsprechenden Gewebelagen 10, 20 gebildeten Innenraum des Gassackes eingeführt wird. Es handelt sich hierbei um einen Gasgenerator 5 in Form eines Rohrgasgenerators, von dessen äußerer Mantelfläche 50 (im Wesentlichen radial) zwei (in Längserstreckungsrichtung des Rohrgasgenerators 5) voneinander beabstandete Montageelemente 51 mit einem verbreiterten Abschnitt 52 in Form eines Bundes abstehen, die zum Eingriff in die Montageöffnungen 16, 21 des Gassackes vorgesehen sind.

Nach dem Einführen des Gasgenerators 2 durch die Einführöffnung 3 hindurch in den Innenraum des Gassackes zwischen den beiden Gassackteilen 1, 2 wird gemäß Figur 3 der Gasgenerator 5 dadurch innerhalb des Gassackes positioniert, dass die beiden Montagebolzen 51 des Gasgenerators 5 in je eine der beiden Montageöffnungen 21 des zweiten Gassackteiles 2 eingeführt werden, wobei der Abstand der Montageöffnungen 21 dem Abstand der Montagebolzen 51 entspricht. Das Durchführen der Verbreiterungen 52 der Montagebolzen 51 erfolgt hierbei unter Dehnung des jeweiligen Randes der Montageöffnungen 21, so dass die Montagebolzen 51 anschließend mit ihrer jeweiligen Verbreiterung 52 in Form eines Bundes den Rand der zugeordneten gassackseitigen Montageöffnung 21 hintergreifen. Hierdurch besteht eine formschlüssige Verbindung zwischen dem Gasgenerator 5 und dem zweiten Gassackteil 2 bzw. der entsprechenden Gewebelage 20. Anschließend wird, wie ebenfalls anhand Figur 3 erkennbar, die an dem mit den Montageöffnungen 21 versehenen zweiten Gassackteil 2 vorgesehene Lasche 25, welche selbst keine Montageöffnungen aufweist, durch die Einführöffnung 3 hindurch in den Innenraum des Gassackes geführt und dort um die Mantelfläche 50 des Gasgenerators 5 herumgelegt bzw. herumgeklappt, so dass sie den Gasgenerator 5 (entlang seiner Mantelfläche 50) zumindest teilweise umgreift.

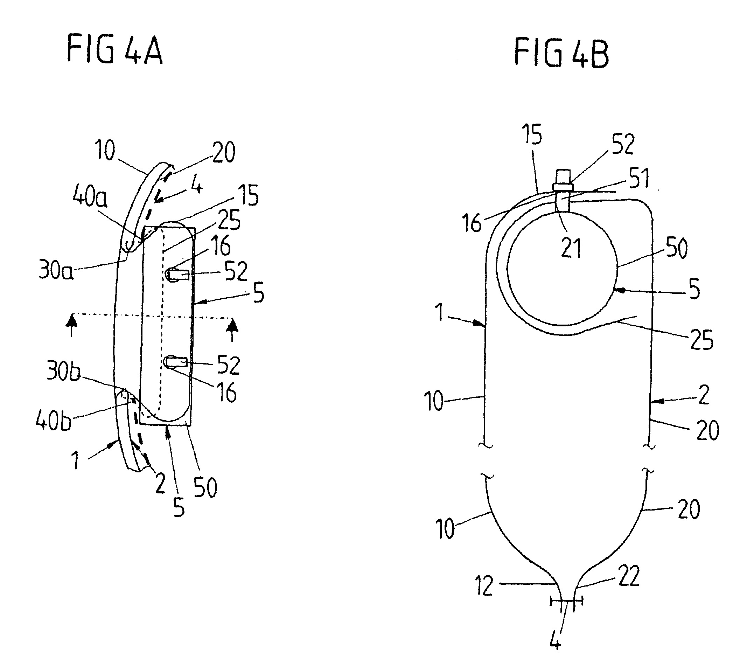

Anschließend wird gemäß den Figuren 4a und 4b die mit zwei Montageöffnungen 16 versehene erste Lasche 15, die an dem außerhalb der Lasche 15 nicht mit Montageöffnungen versehenen ersten Gassackteil 1 bzw. der entsprechenden Gewebelage 10 vorgesehen ist, auf der Außenseite des Gassackes bzw. der durch die Gassackteile 1, 2 gebildeten Gassackhülle über die Einführöffnung 3 gelegt und dabei gleichzeitig um den Gasgenerator 5 bzw. dessen Mantelfläche 50 herumgelegt. Die erste Lasche 1 wird in dieser Lage dadurch fixiert, dass die beiden am Gasgenerator vorgesehenen Montagebolzen 51 in die hierfür vorgesehenen Montageöffnungen 16 der ersten Lasche 15 hineingeführt werden, bis der verbreiterte Abschnitt 52 (Bund) eines jeweiligen Montagebolzens 51 den Rand der zugehörigen Montageöffnung 16 an der ersten Lasche 1 derart hintergreift, dass eine formschlüssige Verbindung zwischen der ersten Lasche 1 und dem Gasgenerator 5 bzw. dessen Montagebolzen 51 besteht. Der Gasgenerator 5 ist dann, wie anhand der Figuren 4a und 4b deutlich wird, definiert im Inneren des Gassackes angeordnet und positioniert und dabei mit beiden Gassackteilen 1, 2 (über seine Montagebolzen 51) verbunden, nämlich mit dem ersten Gassackteil 1 durch Eingriff der Montagebolzen in zugehörige Montageöffnungen 16 der am ersten Gassackteil 1 vorgesehenen Lasche 15, und am zweiten Gassackteil 2 durch unmittelbaren Eingriff in außerhalb der zugehörigen zweiten Lasche 25 vorgesehene Montageöffnungen 21.

Dass vorliegend das erste Gassackteil 1 außerhalb seiner Lasche 15 und die am zweiten Gassackteil 2 vorgesehene Lasche 25 keine Montageöffnungen aufweisen, bedeutet, dass die Funktion der dargestellten Gassackanordnung solche Öffnungen nicht erfordert. Allerdings können zur Schaffung leicht handhabbarer Gleichteile auch zusätzliche Montageöffnungen ohne Funktion vorgesehen sein, z.B. an den Laschen 25 des zweiten Gassackteiles 2.

Die beiden den Gasgenerator 5 umgreifenden Laschen 15, 25 des Gassackes, die an je einem der beiden Gassackteile 1, 2 vorgesehen sind, verschließen in dem in den Figuren 4a und 4b gezeigten Endzustand, der durch die Verbindung mit dem Gasgenerator 5 (über dessen Montagebolzen 51) gesichert ist, die Einführöffnung 3, so dass diese durch die (zumindest entlang der Einführöffnung 3) überlappenden Laschen 15, 25, von denen die eine Lasche 15 sich auf der Außenseite des Gassackes erstreckt und die andere Lasche 25 sich im Innenraum des Gassackes erstreckt, im Wesentlichen gasdicht überdeckt ist. Hierzu sind keine separaten, zusätzlichen, speziell zum Verschließen der Einführöffnung 3 vorgesehenen Elemente erforderlich, sondern dies erfolgt vielmehr über einteilig mit den Gassackteilen 1, 2 ausgebildeten Laschen 15, 25 und an in den Gassackteilen 1, 2 bzw. den Laschen 15, 25 vorgesehenen Montageöffnungen 16, 21 sowie zugeordneten, am Gasgenerator 5 angeordneten Montagebolzen 51. Die in den Figuren 1a bis 4b dargestellte Anordnung zeichnet sich somit neben einer einfachen Montier- und Positionierbarkeit des Gasgenerators 5 im Innenraum des Gassackes auch durch eine einfache zuverlässige Verschließbarkeit der hierfür vorgesehenen Einführöffnung 3 des Gassackes aus.

Selbstverständlich können anstelle der Montagebolzen am Gasgenerator 5 auch andere Verbindungsmittel vorgesehen sein, über die der Gasgenerator mit den Gassackteilen 1, 2 bzw. deren Laschen 15, 25 verbindbar ist.

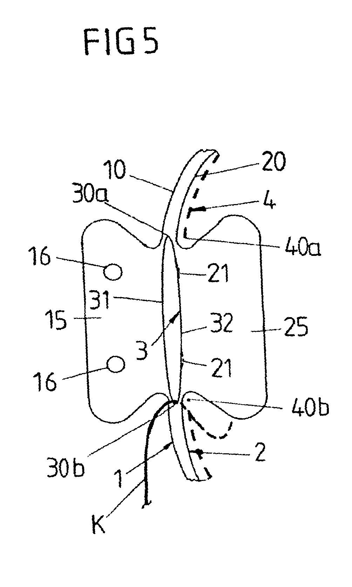

Wie nachfolgend anhand der Figuren 5 bis 7b noch beispielhaft erläutert werden wird, kann die Gestaltung der Einführöffnung, der von den Randabschnitten der Einführöffnung abstehenden Laschen sowie deren Abstand und Lage in Abhängigkeit vom jeweiligen Einsatzzweck variiert werden. Insbesondere kann die Gestaltung der Laschen in Bezug auf die Einführöffnung so sein, dass nach dem Verschließen der Einführöffnung durch die Laschen noch eine Teilöffnung freibleibt, durch die hindurch Montageteile, wie zum Beispiel ein zum elektrischen Anschluss des Gasgenerators vorgesehenes Verbindungskabel oder ein Abschnitt des Gasgenerators selbst, aus dem Innenraum des Gassackes hinausragen können. Die durch die Laschen nicht überdeckte Teilöffnung der Einführöffnung ist hierbei bevorzugt so dimensioniert, dass sie durch das Montageteil, welches sie durchgreift, verschlossen wird.

Gemäß Figur 5, die eine Ansicht eines Gassackes entsprechend Figur 1a darstellt, ist an einem Ende 30b der Einführöffnung 3 zwischen deren beiden Randabschnitten 31, 32 ein Verbindungskabel K in das Innere des Gassackes geführt, so dass ein dort eingeführter Gasgenerator bzw. dessen elektrischer Zündmechanismus über das Verbindungskabel K an das elektrische Bordnetz anschließbar ist.

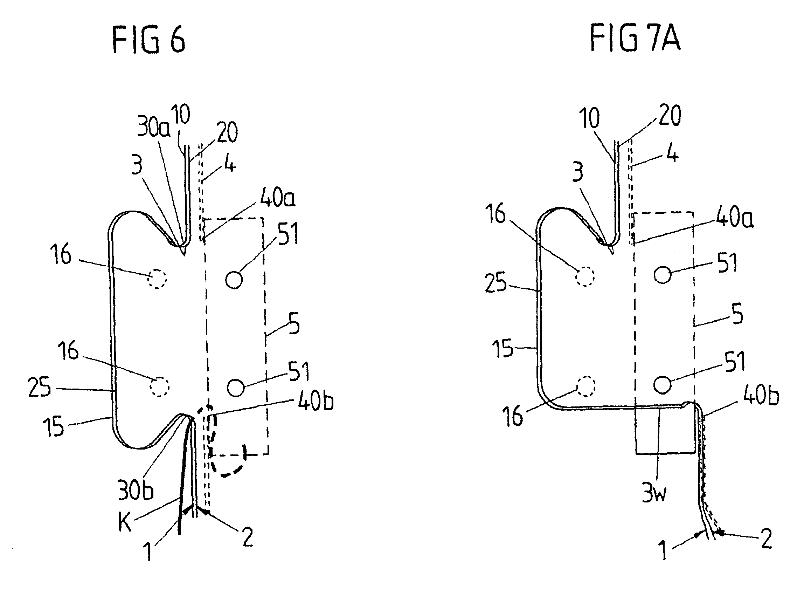

Figur 6 zeigt die Anordnung aus Figur 5 nach dem Einführen eines Gasgenerators 5 in den Innenraum des Gassackes und nach einem Umlegen der zweiten Lasche 25 auf die erste Lasche 15 des Gassackes, bevor die zweite Lasche 25 aus dieser Position heraus in das Innere des Gassackes geführt und dabei um den Gasgenerator 5 herumgelegt wird, vergleiche Figur 3.

Es ist erkennbar, dass nach dem endgültigen Verschließen der Einführöffnung 3 durch Umklappen der ersten Lasche 15 auf der Außenseite des Gassackes über den Gasgenerator 5, wie anhand der Figuren 4a und 4b dargestellt, die Einführöffnung 3 des Gassackes auch bei dem in den Figuren 5 und 6 dargestellten Ausführungsbeispiel im Wesentlichen verschlossen ist, wobei jedoch durch eine entsprechend kleinen Durchgang an einem Ende 30b der Einführöffnung 3 das elektrische Verbindungskabel K vom Innenraum des Gassackes (wo es elektrisch an den Gasgenerator 5 bzw. dessen Zündmechanismus angeschlossen ist) in den Außenraum geführt wird. Dieser Durchgang der Einführöffnung 3 ist wiederum durch das ihn durchgreifende Verbindungskabel K verschlossen.

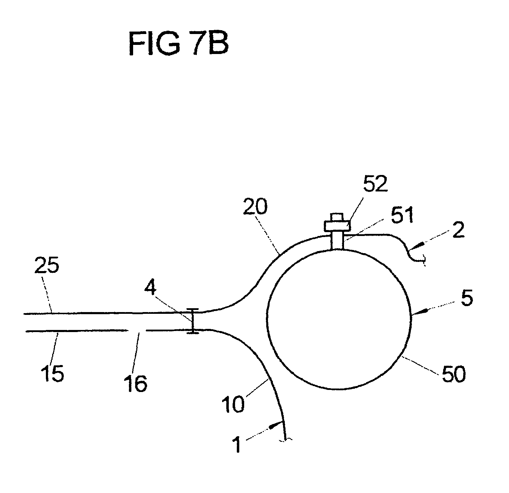

In den Figuren 7a und 7b ist eine Abwandlung des Gassackes aus den Figuren 1a bis 6 in einer Figur 6 entsprechenden Darstellung gezeigt, bei der die beiden Gassackteile 1, 2 in ihren die Einführöffnung 3 begrenzenden Randabschnitten sowie die beiden hiervon abstehenden Laschen 15, 25 so gestaltet sind, dass die zwischen den beiden freien Enden 40a, 40b der Verbindungsnaht 4 der beiden Gassackteile 1, 2 gebildete Einführöffnung 3 einen abgewinkelten Abschnitt 3b aufweist, der beim Umklappen der beiden Laschen 15, 25, wie anhand der Figuren 3, 4a und 4b dargestellt, nicht verschlossen wird. Durch diese abgewinkelte Teilöffnung 3w hindurch kann daher der im Innenraum des Gassackes angeordnete Gasgenerator 5 mit einem Endabschnitt aus diesem hinausragen, so dass eine elektrische Kontaktierung des Gasgenerators 5 mit einem zugeordneten Verbindungskabel außerhalb des Gassackes möglich ist.

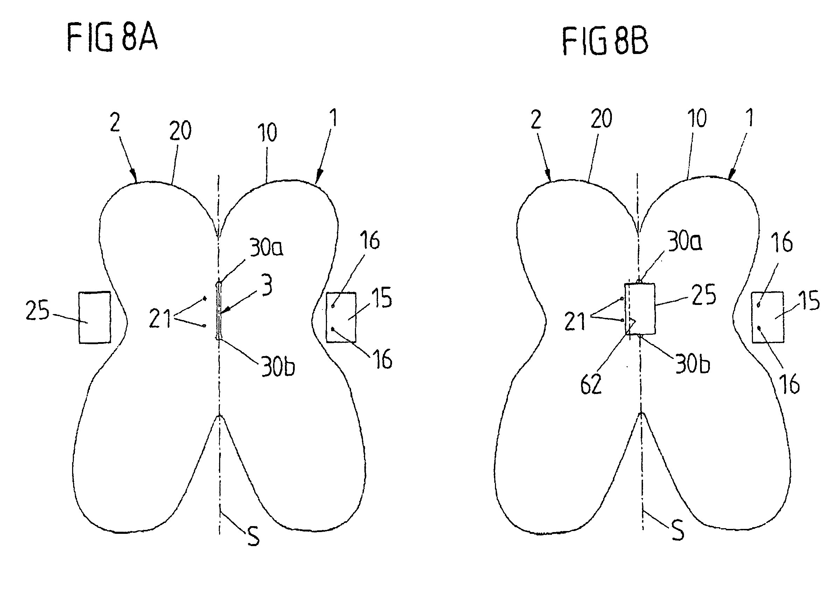

In den Figuren 8a bis 8e sind mehrere Schritte bei der Bildung eines weiteren Gassackes der anhand der Figuren 1a bis 4b gezeigten Art dargestellt, wobei ein wesentlicher Unterschied darin besteht, dass bei dem anhand der Figuren 8a bis 8e beschriebenen Gassack die beiden Gassackteile 1, 2 einstückige Bestandteile einer Gassackplatte sind.

Dies wird deutlich anhand Figur 8a, in der die beiden Gassackteile 1, 2 (gebildet durch Gewebelagen 10, 20) als Bestandteile eines Gassackzuschnittes in Form einer einheitlichen flächigen Gassackplatte (Gewebeplatte) dargestellt sind. Die die beiden flächigen Gassackteile 1, 2 in Form je einer Gewebelage 10, 20 bildende Gassackplatte ist spiegelsymmetrisch zu einer Spiegelachse S ausgebildet, so dass beidseits der Spiegelachse S jedes der beiden Gassackteile 1, 2 einen äußeren Rand aufweist, der mit dem Rand des jeweils anderen der beiden Gassackteile 1, 2 zur Überdeckung bringbar ist, wenn die beiden Gassackteile 1, 2 um die Spiegelachse S als Klappachse geklappt und übereinander gelegt werden.

Der entlang der Spiegelachse S erstreckte Bereich, entlang dem die beiden Gassackteile 1, 2 bzw. die entsprechenden Gewebelagen 10, 20 einstückig miteinander verbunden sind, so dass sie ein einheitliches Gewebe bilden, weist eine entlang der Spiegelachse S längserstreckte schlitzförmige Unterbrechung auf, die eine zwischen zwei Enden 30a, 30b erstreckte Einführöffnung 3 für einen Gasgenerator bildet, wie anhand der Figuren 1a bis 4b beschrieben. Der Unterschied zwischen der Einführöffnung gemäß Figur 8a sowie der anhand der Figuren 1a bis 4b beschriebenen Einführöffnung besteht darin, dass gemäß Figur 8a die Einführöffnung 3 als Unterbrechung in einem Bereich gebildet ist, in dem die beiden Gassackteile 1, 2 einstückig, also ohne Verwendung zusätzlicher Verbindungsmittel, miteinander verbunden sind, während gemäß den Figuren 1a bis 4b die dort dargestellte Einführöffnung dadurch gebildet wird, dass die durch separate Verbindungsmittel in Form einer Naht gebildete Verbindung zwischen zwei Gassackteilen unterbrochen ist.

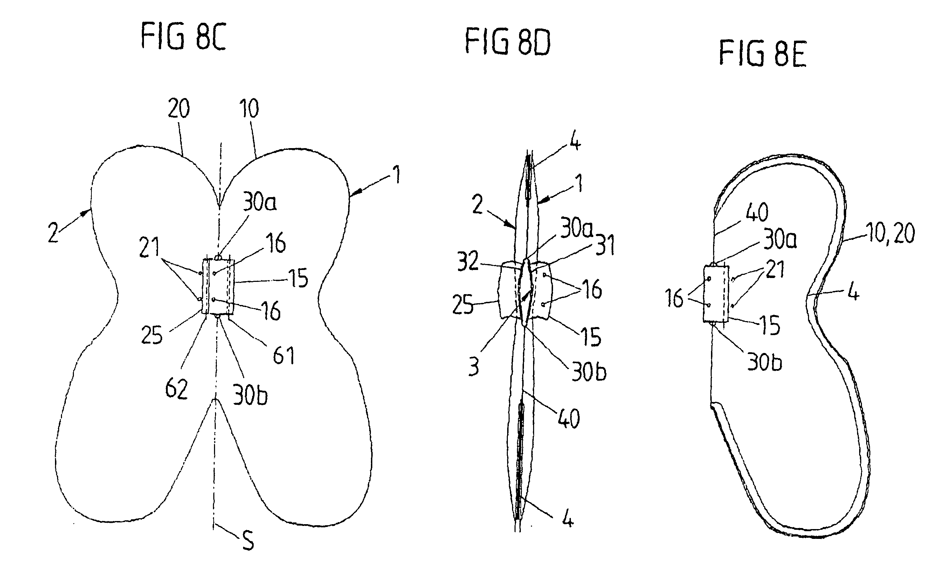

Ferner ist in Figur 8a erkennbar, dass eines der beiden Gassackteile 1, 2 mit zwei Montageöffnungen 21 versehen ist, die der Festlegung des entsprechenden Gassackteiles 2 an einem Gasgenerator dienen, wie oben anhand der Figuren 1a bis 4b beschrieben. Außerdem sind in Figur 8a zwei aus Gewebe bestehende Laschen 15, 25 (Gewebelaschen) dargestellt, die zum Überdecken und Verschließen der Einführöffnung 3 nach dem Einführen eines Gasgenerators in das Innere des Gassackes dienen. Im Unterschied zu dem anhand der Figuren 1a bis 4b beschriebenen Ausführungsbeispiel sind hier die beiden Laschen 15, 25 nicht einstückig an je einem der beiden Gassackteile 1, 2 in Form einer Gewebelage 10 bzw. 20 angewebt, sondern sie werden als separate Komponenten hieran befestigt, wie nachfolgend anhand der Figuren 8b und 8c beschrieben werden wird.

Übereinstimmung mit dem in den Figuren 1a bis 4b gezeigten Ausführungsbeispiel besteht dahingehend, dass eine der beiden Laschen, die an dem nicht mit Montageöffnungen versehenen Gassackteil 1 anzuordnen ist, zwei Montageöffnungen 16 aufweist, während die andere Lasche 25, die an dem mit Montageöffnungen 21 versehenen Gassackteil 2 anzuordnen ist, über keine Montageöffnungen verfügt. Aus Gründen der Verwendung von Gleichteilen wäre es aber möglich, beispielsweise auch die zweite Lasche 25 mit Montageöffnungen zu versehen; jedoch wären diese dann im vorliegenden Ausführungsbeispiel ohne Funktion.

Figur 8b zeigt die zwei Gassackteile 1, 2 bildende Gassackplatte, nachdem die keine Montageöffnungen aufweisende Lasche 25 über eine Naht 62 derart an der Montageöffnungen 21 aufweisenden Gewebelage 20 befestigt worden ist, dass sie flach über der Einführöffnung 3 liegt und diese zwischen den beiden Enden 30a, 30b überdeckt.

Figur 8c zeigt die zwei Gassackteile 1, 2 bildende Gassackplatte aus Figur 8b, nach dem zusätzlich die zwei Montageöffnungen 16 aufweisende Lasche 15 über eine Naht 61 an der keine Montageöffnungen aufweisenden Gewebelage 10 befestigt worden ist, und zwar derart, dass sie einerseits auf der zuvor befestigten Lasche 25 aufliegt und dabei andererseits gemeinsam mit dieser die Einführöffnung 3 überdeckt.

Anschließend werden die beiden Gassackteile 1, 2 bzw. die entsprechenden Gewebelagen 10, 20 derart um die Spiegelachse S als Klappachse zusammengeklappt, dass sie mit ihrem äußeren Rand aneinander anliegen und sich dabei die beiden Laschen 15, 25 auf der Außenseite der durch die Gassackteile 1, 2 bzw. die Gewebelagen 10, 20 gebildeten Hülle des Gassackes befinden, wie anhand der Figuren 8d und 8e in zwei unterschiedlichen Ansichten dargestellt.

Zur Bildung einer bis auf die Einführöffnung 3 geschlossenen Gassackhülle sind die beiden Gassackteile 1, 2 bzw. die Gewebelagen 10, 20 in den Randbereichen, in denen sie nicht (als einheitliche Gewebeplatte) einstückig miteinander verwebt sind, durch geeignete Verbindungsmittel 4, z. B. in Form einer Naht, miteinander verbunden. Wie bereits dargelegt ist beidseits der Enden 30a, 30b der Einführöffnung 3 ein Vernähen der beiden Gassackteile 1, 2 bzw. der Gewebelagen 10, 20 nicht erforderlich, da diese dort über einen Verbindungsbereich 40 einstückig miteinander verwebt sind, nämlich Bestandteile einer einheitlichen Gassack- bzw. Gewebeplatte bilden.

Im Ergebnis entspricht der in den Figuren 8d und 8e dargestellte Gassack - abgesehen von der einteiligen Ausführung der beiden Gewebeteile 1, 2 einerseits sowie der hiervon separaten Ausführung der beiden Laschen 15, 25 andererseits - dem anhand der Figuren 1a und 1b ausschnitthaft dargestellten Gassack. Hinsichtlich des Einführens und der Anordnung eines Gasgenerators in dem in den Figuren 8d und 8e gezeigten Gassack wird daher auf die obigen Ausführungen zu den Figuren 1a bis 4b verwiesen.

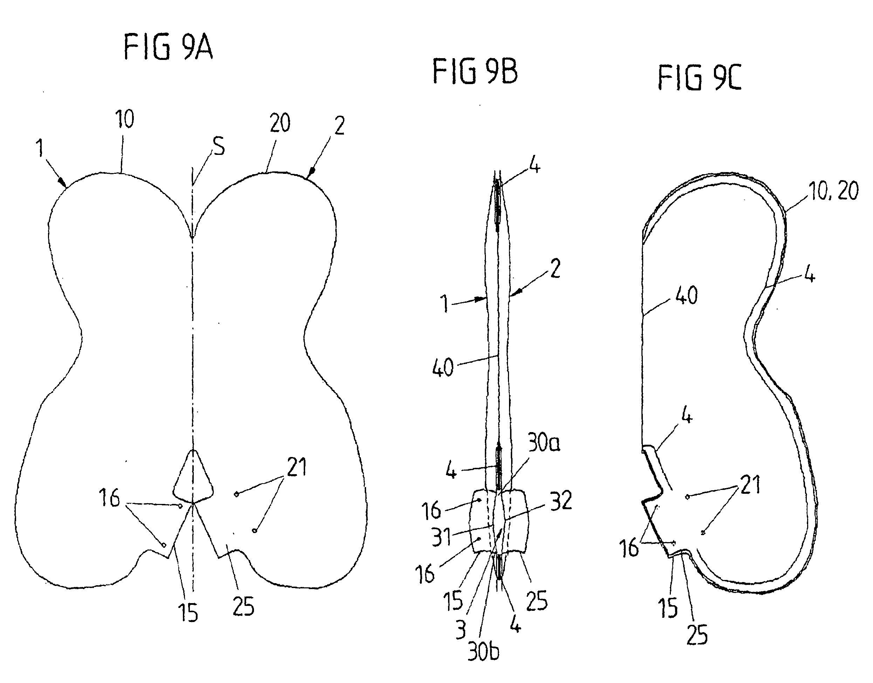

In Figur 9a ist eine Abwandlung des Gassackzuschnittes in Form einer Gassackplatte aus Figur 8a dargestellt, der wiederum zwei symmetrisch bezüglich einer Spiegelachse S ausgeführte Gassackteile 1, 2 bzw. Gewebelagen 10, 20 bildet, wobei jedoch hier außerdem die beiden Laschen 15, 25 einstückig mit dem jeweiligen Gassackteil 1, 2 in Form einer Gewebelage 10, 20 gewebt sind. Ein weiterer Unterschied besteht darin, dass vorliegend, wie insbesondere anhand der Figuren 9b und 9c deutlich wird, die Einführöffnung 30 des aus dem Gassackteil 1, 2 zu bildenden Gassackes in einem Randabschnitt des Gassackes vorzusehen ist, der außerhalb des Verbindungsbereiches liegt, in dem die beiden Gassackteile 1, 2 einstückig miteinander gewebt sind. Dementsprechend stehen die beiden Laschen 15, 25 von dem jeweiligen Gassackteil 1, 2 in einem Bereich ab, in dessen unmittelbarer Umgebung die beiden Gassackteile 1,2 nicht einstückig miteinander verbunden sind.

Die Figuren 9b und 9c zeigen den aus der Gassack- bzw. Gewebeplatte nach Figur 9a gebildeten Gassack. Dieser entsteht, indem die beiden Gassackteile 1, 2 durch Umklappen um die Symmetrieachse S derart aufeinander gelegt werden, dass ihre äußeren Ränder deckungsgleich aufeinander liegen. Die beiden Gassackteile 1, 2 bzw. die Gewebelagen 10, 20 werden dann entlang ihres umlaufenden äußeren Randes - außerhalb des Verbindungsbereiches 40, in dem die beiden Gewebelagen 10, 20 einstückig miteinander verwebt sind - durch eine Naht 4 miteinander verbunden, wobei die Naht 4 jedoch zwischen den beiden Laschen 15, 25 unterbrochen ist, so dass dort eine zwischen zwei Enden 30a, 30b erstreckte Einführöffnung 3 für einen Gasgenerator gebildet wird, von deren einem seitlichen Rand 31 die eine, mit Montageöffnungen 16 versehene Lasche 15 und von deren anderem seitlichen Rand 32 die andere, nicht mit Montageöffnungen versehene Lasche 25 absteht.

Hinsichtlich der Verwendung der Einführöffnung 3 zum Einführen eines Gasgenerators in das Innere des Gassackes sowie das anschließende Überdecken und Verschließen der Einführöffnung, wobei der eingeführte Gasgenerator über Montageöffnungen 16 an einer Lasche 15 und Montageöffnungen 21 an einem Gassackteil 2 definiert innerhalb des Gassackes positioniert wird, wird auf die obigen Ausführungen zu den Figuren 1a bis 4b verwiesen.

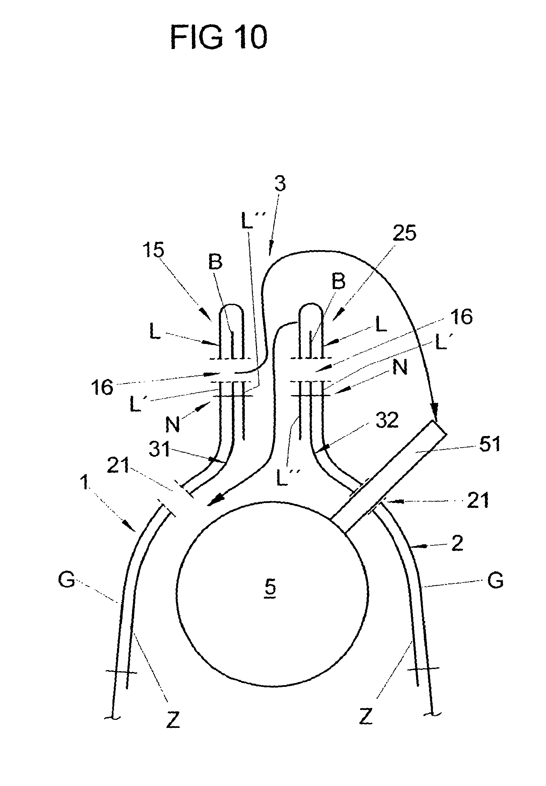

Figur 10 zeigt eine schematische Schnittansicht eines entlang einer Ebene flach ausgebreiteten Gassackes, wobei die Schnittebene senkrecht auf der Ebene steht, entlang der der Gassack ausgebreitet ist.

Der Gassack weist eine Gassackhülle auf, die einen Innenraum des Gassackes umgibt, und die durch zwei entlang ihrer Umfänge miteinander verbundene Gassackteile 1, 2 gebildet wird, die jeweils eine erste Gewebelage G mit einer dem Innenraum der Gassackhülle zugewandten Innenseite und einer dem Innenraum abgewandten, nach außen weisenden Außenseite aufweisen.

Die beiden ersten Gewebelagen G sind in einem flach (faltenfrei) ausgebreiteten Zustand zueinander kongruent ausgebildet, d.h. sie weisen eine identische Form (Umrisskontur) und Fläche auf.

Die Verbindung der beiden Gassackteile 1, 2 (bzw. Gewebelagen G) ist entlang zweier Randabschnitte 31, 32 der beiden Gassackteile 1, 2 unterbrochen, so dass eine Einführöffnung 3 gebildet ist, durch die ein zylinderförmiger Gasgenerator 5 in den Innenraum des Gassackes eingeführt ist.

Von den beiden Randabschnitten 31, 32 steht jeweils eine Lasche 15, 25 ab, die zum Verschließen der Einführöffnung 3 dienen, und die jeweils durch einen flexiblen Materialabschnitt L gebildet sind, der von der jeweiligen ersten Gewebelage G absteht und einstückig mit dieser verbunden ist, sowie durch einen Materialbereich B einer zweiten Gewebelage Z, die im Bereich des Gasgenerators 5 jeweils vor der Innenseite der ersten Gewebelage G im Innenraum der Gassackhülle angeordnet ist.

Dabei umgreift der Materialabschnitt L einer jeweiligen Lasche 15, 25 den Materialbereich B der jeweiligen Lasche 15, 25, so dass die Laschen 15, 25 jeweils dreilagig ausgebildet sind. D.h., der Materialbereich L der jeweiligen Lasche 15, 25, der - bezogen auf einen flach ausgebreiteten Zustand - jeweils von einer ersten Gewebelage G absteht und den zugeordneten Materialbereich B einer zweiten Gewebelage Z dabei mit einem Abschnitt L" überragt, ist mit diesem Abschnitt L" auf den Materialbereich B der jeweiligen Lasche 15, 25 gefaltet, so dass jeweils eine dreilagige Lasche 15, 25 aus zwei Abschnitten L', L" des Materialabschnitts L, die zu beiden Seiten des jeweiligen Materialbereichs B angeordnet sind, gebildet wird. Zum Fixieren dieses Faltzustandes wird der jeweilige Materialabschnitt L mittels einer Naht N mit dem jeweils zugeordneten Materialbereich B verbunden. Die Naht N verbindet dabei die beiden Abschnitte L', L" mit dem dazwischen liegenden Materialbereich B der jeweiligen Lasche 15, 25.

Bevorzugt sind auch die beiden zweiten Gewebelagen Z - bezogen auf einen flach ausgebreiteten Zustand - kongruent bezüglich einander ausgebildet, ebenso wie die beiden Laschen 15, 25, die zudem - im flach ausgebreiteten Zustand der Gassackhülle - spiegelsymmetrisch zueinander ausgebildet sind.

Der vorliegende Gassackzuschnitt zeichnet sich durch eine besonders hohe Symmetrie aus, was die Herstellung des Gassackes vorteilhaft vereinfacht. Aus diesem Grund weisen sowohl die beiden Laschen 15, 25 als auch die beiden Gassackteile 1, 2 jeweils erste und zweite Montageöffnungen 16, 21 auf, die in einem flach ausgebreiteten Zustand der Gassackhülle deckungsgleich aufeinander zu liegen kommen. Diese Montageöffnungen 16, 21 der Laschen 15, 25 und Gassackteile 1, 2 sind durch Ausschnitte der ersten und zweiten Gewebelagen G, Z gebildet, die jeweils deckungsgleich an den Gewebelagen ausgebildet sind (beispielsweise gestanzt), d.h., breitet man die beiden ersten Gewebelagen G flach aus und legt sie kongruent aufeinander, so kommen auch die Ausschnitte, die im verbundenen Zustand der ersten und zweiten Gewebelagen G, Z die ersten und zweiten Montageöffnungen 16, 21 bilden, deckungsgleich aufeinander zu liegen. Dasselbe gilt für die zweiten Gewebelagen Z.

Da die zweiten Montageöffnungen 21 abseits der Laschen 15, 25 und die an den Laschen 15, 25 ausgebildeten ersten Montageöffnungen 16 in Bereichen der Gassackteile 1, 2 ausgebildet sind, in denen diese zumindest zweilagig ausgebildet sind - in diesen Bereichen liegen jeweils die ersten und zweiten Gewebelagen G, Z übereinander - werden die zweiten Montageöffnungen 21 abseits der Laschen 15, 25 jeweils durch einen Ausschnitt der ersten Gewebelage G und einen darauf liegenden Ausschnitt der zweiten Gewebelage Z gebildet.

Bei den dreilagig ausgebildeten Laschen 15, 25 werden die ersten Montageöffnungen 16 jeweils durch zwei Ausschnitte des Materialabschnitts L und einen Ausschnitt des Materialbereichs B gebildet, die im Faltzustand des jeweiligen Materialabschnitts L deckungsgleich übereinander angeordnet sind.

Zum Festlegen des Gasgenerators 5 bezüglich des Gassackes und zum Verschließen der Einführöffnung 3 wird jeweils zumindest eine an einem Gassackteil 2 ausgebildete zweite Montageöffnung 21 und zumindest eine an einer Lasche 15 des jeweils anderen Gassackteils 1 ausgebildete erste Montageöffnung 16 benötigt. Die restlichen Montageöffnung 16, 21 an der anderen Lasche 25 bzw. am anderen Gassackteil 1 werden nicht benötigt und sind lediglich aus Symmetriegründen vorhanden, d.h., die beiden Gassackteile 1, 2 sollen Gleichteile bilden, um die Herstellung des Gassackes zu vereinfachen.

Zunächst wird der Gasgenerator 5 durch die Einführöffnung 3 hindurch in die Gassackhülle eingeführt und dort im Innenraum des Gassackhülle derart angeordnet, dass ein vom Gasgenerator 5 abstehendes Montageelement 51 in Form eines Bolzens durch die zweite Montageöffnung 21 des einen Gassackteiles 2 aus dem Innenraum der Gassackhülle herausragt. Anschließend wird die zu dem einen Gassackteil 2 gehörige Lasche 25 durch die Einführöffnung 3 hindurch im Innenraum der Gassackhülle angeordnet, und zwar derart, dass sie - den Gasgenerator 5 teilweise umgreifend - zwischen dem Gasgenerator 5 und dem anderen Gassackteil 1 zu liegen kommt. Die Lasche 15 des anderen Gassackteils 1 wird sodann über die Einführöffnung 3 (und die Lasche 25) gelegt, wobei der Bolzen 51 durch die erste Montageöffnung 16 der Lasche 15 des anderen Gassackteils 1 geführt wird. Vorzugsweise wird die Lasche 15 des anderen Gassackteils 1 mittels einer Mutter am Bolzen 51 fixiert. Hierdurch wird einerseits die Einführöffnung 3 sicher verschlossen und andererseits der Gasgenerator 5 bezüglich der Gassackhülle festgelegt.

## Patentansprüche

1. Gassack für ein Airbagmodul eines Kraftfahrzeugs, mit
- einer Gassackhülle, die einen mit Gas befüllbaren Innenraum des Gassackes umschließt und die durch mindestens zwei miteinander verbundene Gassackteile gebildet wird, und
- einer Einführöffnung der Gassackhülle, durch die hindurch eine innerhalb des Gassackes anzuordnende Baugruppe des Airbagmoduls in den Innenraum des Gassackes einführbar ist und die durch eine Unterbrechung der Verbindung zwischen den beiden Gassackteilen gebildet wird, so dass die beiden Gassackteile je einen Randabschnitt der Einführöffnung bilden, wobei von jedem der beiden Randabschnitte der Einführöffnung jeweils eine Lasche absteht, wobei
die beiden Laschen (15, 25) jeweils aus zumindest einem flexiblen Materialabschnitt (L) gebildet sind, wobei der mindestens eine Materialabschnitt der einen Lasche (15) in einem flach ausgebreiteten Zustand kongruent bezüglich des mindestens einen Materialabschnitts (L) der anderen Lasche (25) ausgebildet ist, wobei die beiden Gassackteile (1, 2) durch je mindestens eine erste Gewebelage (G) gebildet sind, wobei die Gassackteile (1, 2) je eine zweite Gewebelage (Z) aufweisen, die jeweils vor einer dem Innenraum der Gassackhülle zugewandten Innenseite einer ersten Gewebelage (G) anliegt, und wobei die dem jeweiligen Gassackteil (1, 2) zugeordnete Lasche (15, 25) einen Materialbereich (B) der zweiten Gewebelagen (Z) aufweist,
**dadurch gekennzeichnet,**
**dass** ein Materialabschnitt (L) jeder Lasche (15, 25) derart gefaltet ist, dass er den Materialbereich (B) der zweiten Gewebelage (Z) der Lasche (15, 25) umgreift, wobei durch die Faltung des Materialabschnittes (L) einer jeweiligen Lasche (15, 25) beidseitig des Materialbereiches (B) der zweiten Gewebelage (Z) angeordnete Abschnitte (L', L") des Materialabschnittes (L) am Materialbereich (B) der zweiten Gewebelage (Z) festgelegt sind.

2. Gassack nach Anspruch 1, **dadurch gekennzeichnet, dass** der mindestens eine Materialabschnitt (L) der jeweiligen Lasche (15, 25) jeweils einstückig mit einer ersten Gewebelage (G) ausgebildet ist.

3. Gassack nach Anspruch 1 oder 2, **dadurch gekennzeichnet, dass** die beiden ersten Gewebelagen (G) in einem flach ausgebreiteten Zustand kongruent ausgebildet sind.

4. Gassack nach einem der vorhergehenden Ansprüche, **dadurch gekennzeichnet, dass** die zweiten Gewebelagen (Z) in einem flach ausgebreiteten Zustand kongruent ausgebildet sind.

5. Gassack nach einem der vorhergehenden Ansprüche, **dadurch gekennzeichnet, dass** die durch die Faltung des Materialabschnittes (L) einer jeweiligen Lasche (15, 25) beidseitig des Materialbereiches (B) der zweiten Gewebelage (Z) angeordneten Abschnitte (L', L") des Materialabschnittes (L) mittels einer Naht (N) am Materialbereich (B) der zweiten Gewebelage (Z) festgelegt sind.

6. Gassack nach einem der vorhergehenden Ansprüche, **dadurch gekennzeichnet, dass** die beiden Laschen (15, 25) in einem flach ausgebreiteten Zustand der Gassackhülle spiegelsymmetrisch zueinander angeordnet und ausgebildet sind.

7. Gassack nach einem der vorhergehenden Ansprüche, **gekennzeichnet durch** eine im Innenraum des Gassackes angeordnete, **durch** die Einführöffnung (3) in den Gassack einführbare Baugruppe des Airbagmoduls.

8. Gassack nach einem der vorhergehenden Ansprüche, **dadurch gekennzeichnet, dass** die Laschen (15, 25) derart um die Baugruppe herumgelegt sind, dass sie die Baugruppe zumindest teilweise umgreifen, und dass die beiden Laschen (15, 25) überlappen.

9. Gassack nach einem der vorhergehenden Ansprüche, **dadurch gekennzeichnet, dass** die Baugruppe (5) als eine im Wesentlichen formstabile Baugruppe ausgebildet ist.

10. Gassack nach einem der vorhergehenden Ansprüche, **dadurch gekennzeichnet, dass** die Baugruppe (5) als Gasgenerator zum Aufblasen des Gassackes ausgebildet ist.

11. Gassack nach Anspruch 10, **dadurch gekennzeichnet, dass** die Baugruppe (5) als Rohrgasgenerator ausgebildet ist.

12. Gassack nach einem der Ansprüche 1 bis 9, **dadurch gekennzeichnet, dass** die Baugruppe (5) durch ein Halteteil für den Gassack gebildet wird, über das der Gassack mit einer weiteren Baueinheit eines Airbagmodules verbindbar ist.

13. Gassack nach einem der vorhergehenden Ansprüche, **dadurch gekennzeichnet, dass** die beiden Laschen (15, 25) in entgegengesetzter Richtung um die Baugruppe (5) herumgelegt sind.

14. Gassack nach einem der vorhergehenden Ansprüche, **dadurch gekennzeichnet, dass** mindestens eine der beiden Laschen (15, 25) an der Baugruppe (5) festgelegt ist.

15. Gassack nach einem der vorhergehenden Ansprüche, **dadurch gekennzeichnet, dass** im Überlappungsbereich der beiden Laschen (15, 25) die eine Lasche (15) die andere Lasche (25) zumindest teilweise überdeckt, so dass die andere Lasche (25) sich zwischen der einen Lasche (15) und der Baugruppe (5) erstreckt.

16. Gassack nach Anspruch 14 und 15, **dadurch gekennzeichnet, dass** zumindest die eine Lasche (15) an der Baugruppe (5) festgelegt ist.

17. Gassack nach einem der Ansprüche 14 bis 16, **dadurch gekennzeichnet, dass** zur Festlegung der mindesten einen Lasche (15, 25) an der Baugruppe (5) von der Baugruppe (5) ein Montagelement (51) absteht, das eine Montageöffnung (16) der Lasche (15) durchgreift.

18. Gassack nach Anspruch 17, **dadurch gekennzeichnet, dass** das mindestens eine Montageelement (51) durch einen Montagebolzen gebildet wird.

19. Gassack nach Anspruch 17 oder 18, **dadurch gekennzeichnet, dass** das Montagelement (51) eine Verbreiterung (52) aufweist, die die jeweils zugeordnete Montageöffnung (16) an deren Rand hintergreift.

20. Gassack nach einem der vorhergehenden Ansprüche, **dadurch gekennzeichnet, dass** die Verbreiterung (52) durch einen Bund des Montageelementes (51) gebildet wird.

21. Gassack nach einem der vorhergehenden Ansprüche, **dadurch gekennzeichnet, dass** eine Lasche (15) die Einführöffnung (3) auf der dem Innenraum des Gassackes abgewandten Außenseite der Gassackhülle überdeckt.

22. Gassack nach Anspruch 21, **dadurch gekennzeichnet, dass** eine andere Lasche (25) durch die Einführöffnung (3) in den Innenraum des Gassackes geführt ist und sich auf der Innenseite der Gassackhülle vor der Einführöffnung (3) erstreckt.

23. Gassack nach Anspruch 15 und Anspruch 21 oder 22, **dadurch gekennzeichnet, dass** die eine Lasche (15) die andere Lasche (25) überdeckt.

24. Gassack nach Anspruch 14 und einem der Ansprüche 21 bis 23, **dadurch gekennzeichnet, dass** zumindest die eine Lasche (15) an der Baugruppe (5) festgelegt ist.

25. Gassack nach einem der vorhergehenden Ansprüche, **dadurch gekennzeichnet, dass** mindestens eines der Gassackteile (1, 2) außerhalb der zugehörigen Lasche (15, 25) an der Baugruppe (5) festgelegt ist.

26. Gassack nach Anspruch 15 oder Anspruch 21 und Anspruch 25, **dadurch gekennzeichnet, dass** dasjenige Gassackteil (2) außerhalb der zugehörigen Lasche (25) an der Baugruppe (5) festgelegt ist, von dem die andere Lasche (25) an einem Randabschnitt (32) der Einführöffnung (3) absteht.

27. Gassack nach Anspruch 25 oder 26, **dadurch gekennzeichnet, dass** zur Festlegung des Gassackteiles (2) an der Baugruppe (5) von der Baugruppe (5) mindestens ein Montagelement (51) absteht, das eine Montageöffnung (21) des Gassackteiles (2) durchgreift.

28. Gassack nach Anspruch 27, **dadurch gekennzeichnet, dass** das mindestens eine Montagelement (51) durch einen Montagebolzen gebildet wird.

29. Gassack nach Anspruch 27 oder 28, **dadurch gekennzeichnet, dass** das Montagelement (51) eine Verbreiterung (52) aufweist, die die zugeordnete Montageöffnung (16) an deren Rand hintergreift.

30. Gassack nach Anspruch 29, **dadurch gekennzeichnet, dass** die Verbreiterung (52) durch einen Bund des Montageelementes (51) oder durch eine Gewindemutter gebildet wird.

31. Gassack nach einem der Ansprüche 17 bis 20 und einem der Ansprüche 27 bis 30. **dadurch gekennzeichnet, dass** dasselbe Montageelement (51) oder dieselben Montageelemente (51) zur Festlegung der mindestens einen Lasche (15) und zur Festlegung des mindestens einen Gassackteiles (2) an der Baugruppe (5) vorgesehen sind.

32. Gassack nach einem der vorhergehenden Ansprüche, **dadurch gekennzeichnet, dass** eine jeweilige Lasche (15, 25) sich im Wesentlichen entlang des gesamten zugeordneten Randabschnittes (31, 32) der Einführöffnung (3) erstreckt, so dass der Rand (31, 32) der Einführöffnung (3) im Wesentlichen vollständig durch die Laschen (15, 25) begrenzt ist.

33. Gassack nach einem der vorhergehenden Ansprüche, **dadurch gekennzeichnet, dass** die Einführöffnung (3) durch die einander überdeckenden Laschen (15, 25) im Wesentlichen verschlossen ist.

34. Gassack nach Anspruch 33, **dadurch gekennzeichnet, dass** die Einführöffnung (3) durch die Laschen (15, 25) bis auf einen Durchgang für ein elektrisches Verbindungskabel (K) verschlossen ist.

35. Gassack nach einem der Ansprüche 1 bis 32, **dadurch gekennzeichnet, dass** die Einführöffnung (3) durch die überlappenden Laschen (15, 25) bis auf eine Teilöffnung verschlossen ist, durch die hindurch die innerhalb des Gassackes angeordnete Baugruppe (5) teilweise aus dem Innenraum des Gassackes hinausragt.

36. Gassack nach einem der vorhergehenden Ansprüche, **dadurch gekennzeichnet, dass** die Randabschnitte (31, 32) der Einführöffnung (3) einander gegenüberliegend angeordnet sind.

37. Gassack nach einem der vorhergehenden Ansprüche, **dadurch gekennzeichnet, dass** die Randabschnitte (31, 32) der Einführöffnung (3) zueinander spiegelsymmetrisch angeordnet und ausgebildet sind.

38. Gassack nach einem der vorhergehenden Ansprüche, **dadurch gekennzeichnet, dass** die jeweilige Lasche (15, 25) einstückig mit dem zugehörigen Gassackteil (1, 2) geformt, insbesondere gewebt ist.

39. Gassack nach einem der Ansprüche 1 bis 37, **dadurch gekennzeichnet, dass** die jeweilige Lasche (15, 25) als separates Teil am zugeordneten Gassackteil (1, 2) festgelegt ist.

40. Gassack nach einem der vorhergehenden Ansprüche, **dadurch gekennzeichnet, dass** die Gassackteile (1, 2) durch je mindestens eine Gewebelage gebildet werden.

41. Gassack nach einem der vorhergehenden Ansprüche, **dadurch gekennzeichnet, dass** die Gassackteile (1, 2) außerhalb der Einführöffnung (3) miteinander verbunden sind.

42. Gassack nach einem der vorhergehenden Ansprüche, **dadurch gekennzeichnet, dass** die Gassackteile (1, 2) außerhalb der Einführöffnung (3) zumindest abschnittsweise durch Nähen, Kleben oder Nieten miteinander verbunden sind.

43. Gassack nach einem der vorhergehenden Ansprüche, **dadurch gekennzeichnet, dass** die Gassackteile (1, 2) außerhalb der Einführöffnung (3) zumindest abschnittsweise einstückig miteinander verbunden sind.

44. Gassack nach einem der vorhergehenden Ansprüche, **dadurch gekennzeichnet, dass** die beiden Laschen (15, 25) je mindestens eine erste Montageöffnung (16) aufweisen, wobei die Montageöffnungen (16) in einem flach ausgebreiteten Zustand der Gassackhülle zueinander deckungsgleich ausgebildet sind.

45. Gassack nach einem der vorangegangenen Ansprüche, **dadurch gekennzeichnet, das** die beiden Gassackteile (1, 2) außerhalb der Laschen (15, 25) je mindestens eine zweite Montageöffnung (21) aufweisen, wobei die Montageöffnungen (21) in einem flach ausgebreiteten Zustand der Gassackhülle zueinander deckungsgleich ausgebildet sind.

46. Gassack nach einem der vorhergehenden Ansprüche, **dadurch gekennzeichnet, dass** die eine Lasche (15) des einen Gassackteiles (1) zum Verschließen der Einführöffnung (3) über die andere Lasche (25) des anderen Gassackteiles (2) gelegt ist.

47. Gassack nach Anspruch 45 bis 46, **dadurch gekennzeichnet, dass** die mindestens eine erste Montageöffnung (16) der Lasche (15) des einen Gassackteiles (1) deckungsgleich auf der mindestens einen zweiten Montageöffnung (21) des anderen Gassackteiles (2) angeordnet ist, so dass die beiden Montageöffnungen (16, 21) zum Verschließen der Einführöffnung (3) von einem Montageelement (51) durchgriffen werden können.

## Claims

1. Airbag for an airbag module of a motor vehicle, having
- an airbag sleeve which surrounds an interior of the airbag which can be filled with gas and which is formed by at least two airbag parts which are connected to one another, and
- an insertion opening of the airbag sleeve through which an assembly of the airbag module which is to be arranged inside the airbag can be inserted into the interior of the airbag and which is formed by an interruption of the connection between the two airbag parts so that the two airbag parts each form one edge section of the insertion opening, in each case one lug protruding from each of the two edge sections of the insertion opening,
the two lugs (15, 25) each being formed from at least one flexible material section (L), the at least one material section of the one lug (15) being embodied congruent with respect to the at least one material section (L) of the other lug (25) in a spread out flat state, the two airbag parts (1, 2) being formed by at least one first fabric layer (G) each, the airbag parts (1, 2) each having a second fabric layer (Z) which bears in each case in front of an inner side of a first fabric layer (G) which faces the interior of the airbag sleeve, and the lug (15, 25) assigned to the respective airbag part (1, 2) having a material region (B) of the second fabric layers (Z),
**characterized in that**
a material section (L) of each lug (15, 25) is folded in such a way that it engages around the material region (B) of the second fabric layer (Z) of the lug (15, 25), sections (L', L'') of the material section (L) which are arranged on each side of the material region (B) of the second fabric layer (Z) as a result of the folding of the material section (L) of a respective lug (15, 25) being secured to the material region (B) of the second fabric layer (Z).

2. Airbag according to Claim 1, **characterized in that** the at least one material section (L) of the respective lug (15, 25) is embodied in each case in one piece with a first fabric layer (G).

3. Airbag according to Claim 1 or 2, **characterized in that** the two first fabric layers (G) are embodied congruent in a spread out flat state.

4. Airbag according to one of the preceding claims, **characterized in that** the second fabric layers (Z) are embodied congruent in a spread out flat state.

5. Airbag according to one of the preceding claims, **characterized in that** the sections (L', L") of the material section (L) which are arranged on each side of the material region (B) of the second fabric layer (Z) as a result of the folding of the material section (L) of a respective lug (15, 25) are secured to the material region (B) of the second fabric layer (Z) by means of a seam (N).

6. Airbag according to one of the preceding claims, **characterized in that** the two lugs (15, 25) are arranged and embodied so as to be mirror symmetrical to one another in a spread out flat state of the airbag sleeve.

7. Airbag according to one of the preceding claims, **characterized by** an assembly of the airbag module which is arranged in the interior of the airbag and can be inserted into the airbag through the insertion opening (3).

8. Airbag according to one of the preceding claims, **characterized in that** the lugs (15, 25) are laid around the assembly in such a way that they at least partially engage around the assembly, and **in that** the two lugs (15, 25) overlap.

9. Airbag according to one of the preceding claims, **characterized in that** the assembly (5) is embodied as an essentially dimensionally stable assembly.

10. Airbag according to one of the preceding claims, **characterized in that** the assembly (5) is embodied as a gas generator for inflating the airbag.

11. Airbag according to Claim 10, **characterized in that** the assembly (5) is embodied as a tubular gas generator.

12. Airbag according to one of Claims 1 to 9, **characterized in that** the assembly (5) is formed by a holding part for the airbag, by means of which the airbag can be connected to a further unit of an airbag module.

13. Airbag according to one of the preceding claims, **characterized in that** the two lugs (15, 25) are placed around the assembly (5) in opposite directions.

14. Airbag according to one of the preceding claims, **characterized in that** at least one of the two lugs (15, 25) is secured to the assembly (5).

15. Airbag according to one of the preceding claims, **characterized in that** in the overlapping region of the two lugs (15, 25) the one lug (15) at least partially covers the other lug (25) so that the other lug (25) extends between the one lug (15) and the assembly (5).

16. Airbag according to Claims 14 and 15, **characterized in that** at least the one lug (15) is secured to the assembly (5).

17. Airbag according to one of Claims 14 to 16, **characterized in that** a mounting element (51) which engages through a mounting opening (16) of the lug (15) protrudes from the assembly (5) in order to secure the at least one lug (15, 25) to the assembly (5).

18. Airbag according to Claim 17, **characterized in that** the at least one mounting element (51) is formed by a mounting bolt.

19. Airbag according to Claim 17 or 18, **characterized in that** the mounting element (51) has a widened portion (52) which engages behind the respectively assigned mounting opening (16), on the edge of said mounting opening (16).

20. Airbag according to one of the preceding claims, **characterized in that** the widened portion (52) is formed by a collar of the mounting element (51).

21. Airbag according to one of the preceding claims, **characterized in that** one lug (15) covers the insertion opening (3) on the outside of the airbag sleeve facing away from the interior of the airbag.

22. Airbag according to Claim 21, **characterized in that** another lug (25) is led into the interior of the airbag through the insertion opening (3) and extends on the inside of the airbag sleeve, in front of the insertion opening (3).

23. Airbag according to Claim 15 and Claim 21 or 22, **characterized in that** one lug (15) covers the other lug (25).

24. Airbag according to Claim 14 and one of Claims 21 to 23, **characterized in that** at least the one lug (15) is secured to the assembly (5).

25. Airbag according to one of the preceding claims, **characterized in that** at least one of the airbag parts (1, 2) is secured to the assembly (5) outside the associated lug (15, 25).

26. Airbag according to Claim 15 or Claim 21 and Claim 25, **characterized in that** that airbag part (2) from which the other lug (25) protrudes at an edge section (32) of the insertion opening (3) is secured to the assembly (5) outside the associated lug (25).

27. Airbag according to Claim 25 or 26, **characterized in that** at least one mounting element (51) which engages through a mounting opening (21) in the airbag part (2) protrudes from the assembly (5) in order to secure the airbag part (2) to the assembly (5).

28. Airbag according to Claim 27, **characterized in that** the at least one mounting element (51) is formed by a mounting bolt.

29. Airbag according to Claim 27 or 28, **characterized in that** the mounting element (51) has a widened portion (52) which engages behind the assigned mounting opening (16), on the edge of said mounting opening (16).

30. Airbag according to Claim 29, **characterized in that** the widened portion (52) is formed by a collar of the mounting element (51) or by a threaded nut.

31. Airbag according to one of Claims 17 to 20 and one of Claims 27 to 30, **characterized in that** the same mounting element (51) or the same mounting elements (51) are provided for securing the at least one lug (15) and for securing the at least one airbag part (2) to the assembly (5).

32. Airbag according to one of the preceding claims, **characterized in that** a respective lug (15, 25) extends essentially along the entire assigned edge section (31, 32) of the insertion opening (3) so that the edge (31, 32) of the insertion opening (3) is bounded essentially completely by the lugs (15, 25).

33. Airbag according to one of the preceding claims, **characterized in that** the insertion opening (3) is essentially closed off by the lugs (15, 25) which cover one another.

34. Airbag according to Claim 33, **characterized in that** the insertion opening (3) is closed off by the lugs (15, 25) except for a passage for an electric connecting cable (K).

35. Airbag according to one of Claims 1 to 32, **characterized in that** the insertion opening (3) is closed off by the overlapping lugs (15, 25) except for a partial opening through which the assembly (5) which is arranged inside the airbag partially projects out of the interior of the airbag.

36. Airbag according to one of the preceding claims, **characterized in that** the edge sections (31, 32) of the insertion opening (3) are arranged opposite one another.

37. Airbag according to one of the preceding claims, **characterized in that** the edge sections (31, 32) of the insertion opening (3) are arranged and embodied mirror symmetrically to one another.

38. Airbag according to one of the preceding claims, **characterized in that** the respective lug (15, 25) is formed in one piece with the associated airbag part (1, 2), in particular woven.

39. Airbag according to one of the Claims 1 to 37, **characterized in that** the respective lug (15, 25) is secured as a separate part to the assigned airbag part (1, 2).

40. Airbag according to one of the preceding claims, **characterized in that** the airbag parts (1, 2) are formed by at least one fabric layer each.

41. Airbag according to one of the preceding claims, **characterized in that** the airbag parts (1, 2) are connected to one another outside the insertion opening (3).

42. Airbag according to one of the preceding claims, **characterized in that** the airbag parts (1, 2) are connected to one another outside the insertion opening (3), at least in certain sections, by sewing, bonding or riveting.

43. Airbag according to one of the preceding claims, **characterized in that** the airbag parts (1, 2) are connected to one another in one piece outside the insertion opening (3), at least in certain sections.

44. Airbag according to one of the preceding claims, **characterized in that** the two lugs (15, 25) have at least one first mounting opening (16) each, the mounting openings (16) being embodied congruent with respect to one another in a spread out flat state of the airbag sleeve.

45. Airbag according to one of the preceding claims, **characterized in that** the two airbag parts (1, 2) have at least one second mounting opening (21) each outside the lugs (15, 25), the mounting openings (21) being embodied congruent with respect to one another in a spread out flat state of the airbag sleeve.

46. Airbag according to one of the preceding claims, **characterized in that** the one lug (15) of one (1) of the airbag parts is laid over the other lug (25) of the other airbag part (2) in order to close the insertion opening (3).

47. Airbag according to Claim 45 to 46, **characterized in that** the at least one first mounting opening (16) of the lug (15) of one (1) of the airbag parts is arranged congruently on the at least one second mounting opening (21) of the other airbag part (2) so that a mounting element (51) can engage through the two mounting openings (16, 21) in order to close the insertion opening (3).

## Revendications

1. Sac à gaz destiné à un module d'airbag d'un véhicule automobile, comprenant
- une enveloppe de sac à gaz, qui renferme un espace intérieur du sac à gaz pouvant être rempli de gaz et qui est formée par au moins deux parties de sac à gaz reliées l'une à l'autre, et
- une ouverture d'insertion de l'enveloppe de sac à gaz, à travers laquelle un sous-ensemble du module d'airbag à disposer dans le sac à gaz peut être inséré dans l'espace intérieur du sac à gaz et qui est formée par une coupure de la liaison entre les deux parties de sac à gaz, de sorte que les deux parties de sac à gaz forment chacune une section de bord de l'ouverture d'insertion, une languette dépassant de chacune des deux sections de bord de l'ouverture d'insertion,
les deux languettes (15, 25) étant constituées chacune d'au moins une section de matière flexible (L), la au moins une section de matière de la première languette (15) étant conçue de façon congruente par rapport à la au moins une section de matière (L) de l'autre languette (25) dans un état déployé à plat, les deux parties de sac à gaz (1, 2) étant formées chacune par au moins une première nappe textile (G), les parties de sac à gaz (1, 2) présentant chacune une deuxième nappe textile (Z), qui est située devant un côté intérieur, d'une première nappe textile (G), orienté vers l'espace intérieur de l'enveloppe de sac à gaz, et la languette (15, 25) affectée à la partie de sac à gaz respective (1, 2) présentant une zone de matière (B) des deuxièmes nappes textiles (Z),
**caractérisé en ce que,**
une section de matière (L) de chaque languette (15, 25) est pliée de telle sorte qu'elle enveloppe la zone de matière (B) de la deuxième nappe textile (Z) de la languette (15, 25), des sections (L', L") de la section de matière (L) disposées de part et d'autre de la zone de matière (B) de la deuxième nappe textile (Z) étant définies sur la zone de matière (B) de la deuxième nappe textile (Z) par le pliage de la section de matière (L) d'une languette respective (15, 25).

2. Sac à gaz selon la revendication 1, **caractérisé en ce que** la au moins une section de matière (L) de la languette respective (15, 25) est toujours conçue respectivement d'un seul tenant avec une première nappe textile (G).

3. Sac à gaz selon la revendication 1 ou 2, **caractérisé en ce que** les deux premières nappes textiles (G) sont conçues de façon congruente dans un état déployé à plat.

4. Sac à gaz selon l'une des revendications précédentes, **caractérisé en ce que** les deuxièmes nappes textiles (Z) sont conçues de façon congruente dans un état déployé à plat.

5. Sac à gaz selon l'une des revendications précédentes, **caractérisé en ce que** les sections (L', L") de la section de matière (L) disposées de part et d'autre de la zone de matière (B) de la deuxième nappe textile (Z) par le pliage de la section de matière (L) d'une languette respective (15, 25) sont définies par une couture (N) sur la zone de matière (B) de la deuxième nappe textile (Z).

6. Sac à gaz selon l'une des revendications précédentes, **caractérisé en ce que** les deux languettes (15, 25) sont disposées et conçues symétriquement l'une par rapport à l'autre dans un état déployé à plat de l'enveloppe de sac à gaz.

7. Sac à gaz selon l'une des revendications précédentes, **caractérisé par** un sous-ensemble du module d'airbag disposé dans l'espace intérieur du sac à gaz, insérable dans le sac à gaz par une ouverture d'insertion (3).

8. Sac à gaz selon l'une des revendications précédentes, **caractérisé en ce que** les languettes (15, 25) sont mises de telle façon autour du sous-ensemble qu'elles entourent au moins partiellement le sous-ensemble, et que les deux languettes (15, 25) se chevauchent.

9. Sac à gaz selon l'une des revendications précédentes, **caractérisé en ce que** le sous-ensemble (5) est conçu comme un sous-ensemble sensiblement indéformable.

10. Sac à gaz selon l'une des revendications précédentes, **caractérisé en ce que** le sous-ensemble (5) est conçu comme un générateur de gaz permettant de gonfler le sac à gaz.

11. Sac à gaz selon la revendication 10, **caractérisé en ce que** le sous-ensemble (5) est conçu comme un générateur de gaz tubulaire.

12. Sac à gaz selon l'une des revendications 1 à 9, **caractérisé en ce que** le sous-ensemble (5) est formé par une pièce de maintien pour le sac à gaz, par laquelle le sac à gaz peut être relié à une autre unité modulaire d'un module d'airbag.

13. Sac à gaz selon l'une des revendications précédentes, **caractérisé en ce que** les deux languettes (15, 25) sont mises autour du sous-ensemble (5) en sens opposé.

14. Sac à gaz selon l'une des revendications précédentes, **caractérisé en ce que** au moins une des deux languettes (15, 25) est fixée au sous-ensemble (5).

15. Sac à gaz selon l'une des revendications précédentes, **caractérisé en ce que** dans la zone de chevauchement des deux languettes (15, 25), la première languette (15) recouvre au moins partiellement l'autre languette (25), si bien que l'autre languette (25) s'étend entre la première languette (15) et le sous-ensemble (5).

16. Sac à gaz selon les revendications 14 et 15, **caractérisé en ce que** au moins la première languette (15) est fixée au sous-ensemble (5).

17. Sac à gaz selon l'une des revendications 14 à 16, **caractérisé en ce que** pour la fixation de la au moins une languette (15, 25) au sous-ensemble (5), un élément de montage (51) dépasse du sous-ensemble (5), lequel élément traverse une ouverture de montage (16) de la languette (15).

18. Sac à gaz selon la revendication 17, **caractérisé en ce que** le au moins un élément de montage (51) est formé par un boulon de montage.

19. Sac à gaz selon la revendication 17 ou 18, **caractérisé en ce que** l'élément de montage (51) présente un élargissement (52), qui vient en prise derrière l'ouverture de montage (16) correspondante sur le bord de celle-ci.

20. Sac à gaz selon l'une des revendications précédentes, **caractérisé en ce que** l'élargissement (52) est formé par un rebord de l'élément de montage (51).

21. Sac à gaz selon l'une des revendications précédentes, **caractérisé en ce qu'**une languette (15) recouvre l'ouverture d'insertion (3) sur le côté extérieur de l'enveloppe de sac à gaz, opposé à l'espace intérieur du sac à gaz.

22. Sac à gaz selon la revendication 21, **caractérisé en ce qu'**une autre languette (25) est insérée dans l'espace intérieur du sac à gaz à travers l'ouverture d'insertion (3) et s'étend sur le côté intérieur de l'enveloppe de sac à gaz devant l'ouverture d'insertion (3).

23. Sac à gaz selon la revendication 15 et 21 ou 22, **caractérisé en ce qu'**une première languette (15) recouvre l'autre languette (25).

24. Sac à gaz selon la revendication 14 et l'une des revendications 21 à 23, **caractérisé en ce que** au moins la première languette (15) est fixée au sous-ensemble (5).

25. Sac à gaz selon l'une des revendications précédentes, **caractérisé en ce que** au moins une des parties de sac à gaz (1, 2) est fixée au sous-ensemble (5) à l'extérieur de la languette correspondante (15, 25).

26. Sac à gaz selon la revendication 15 ou 21 et 25, **caractérisé en ce que** la partie de sac à gaz (2) est fixée au sous-ensemble (5) à l'extérieur de la languette correspondante (25), duquel sous-ensemble dépasse l'autre languette (25) sur une section de bord (32) de l'ouverture d'insertion (3).

27. Sac à gaz selon la revendication 25 ou 26, **caractérisé en ce que** pour la fixation de la partie de sac à gaz (2) au sous-ensemble (5), au moins un élément de montage (51) dépasse du sous-ensemble (5), lequel élément traverse une ouverture de montage (21) de la partie de sac à gaz (2).

28. Sac à gaz selon la revendication 27, **caractérisé en ce que** le au moins un élément de montage (51) est formé par un boulon de montage.

29. Sac à gaz selon la revendication 27 ou 28, **caractérisé en ce que** l'élément de montage (51) présente un élargissement (52), qui vient en prise derrière l'ouverture de montage (16) affectée sur le bord de celle-ci.

30. Sac à gaz selon la revendication 29, **caractérisé en ce que** l'élargissement (52) est formé par un rebord de l'élément de montage (51) ou par un écrou fileté.

31. Sac à gaz selon l'une des revendications 17 à 20 et l'une des revendications 27 à 30, **caractérisé en ce que** le même élément de montage (51) ou les mêmes éléments de montage (51) sont prévus pour la fixation de la au moins une languette (15) et pour la fixation de la au moins une partie de sac à gaz (2) au sous-ensemble (5).

32. Sac à gaz selon l'une des revendications précédentes, **caractérisé en ce qu'**une languette (15, 25) s'étend sensiblement le long de la section de bord associée complète (31, 32) de l'ouverture d'insertion (3), si bien que le bord (31, 32) de l'ouverture d'insertion (3) est délimité quasiment complètement par les languettes (15, 25).

33. Sac à gaz selon l'une des revendications précédentes, **caractérisé en ce que** l'ouverture d'insertion (3) est quasiment fermée par les languettes (15, 25) se recouvrant.

34. Sac à gaz selon la revendication 33, **caractérisé en ce que** l'ouverture d'insertion (3) est fermée par les languettes (15, 25) jusqu'à un passage pour un câble de connexion électrique (K).

35. Sac à gaz selon l'une des revendications 1 à 32, **caractérisé en ce que** l'ouverture d'insertion (3) est formée par les languettes (15, 25) se chevauchant jusqu'à une ouverture partielle par laquelle le sous-ensemble (5) disposé dans le sac à gaz émerge partiellement de l'espace intérieur du sac à gaz.

36. Sac à gaz selon l'une des revendications précédentes, **caractérisé en ce que** les sections de bord (31, 32) de l'ouverture d'insertion (3) sont disposées en vis-à-vis.

37. Sac à gaz selon l'une des revendications précédentes, **caractérisé en ce que** les sections de bord (31, 32) de l'ouverture d'insertion (3) sont disposées et conçues symétriquement l'une à l'autre.

38. Sac à gaz selon l'une des revendications précédentes, **caractérisé en ce que** la languette (15, 25) est formée, en particulier tissée, d'un seul tenant avec la partie de sac à gaz (1, 2) correspondante.

39. Sac à gaz selon l'une des revendications 1 à 37, **caractérisé en ce que** la languette (15, 25) est fixée à la partie de sac à gaz associée (1, 2) en tant que pièce séparée.

40. Sac à gaz selon l'une des revendications précédentes, **caractérisé en ce que** les parties de sac à gaz (1, 2) sont formées par chacune au moins une nappe textile.

41. Sac à gaz selon l'une des revendications précédentes, **caractérisé en ce que** les parties de sac à gaz (1, 2) sont reliées l'une à l'autre à l'extérieur de l'ouverture d'insertion (3).

42. Sac à gaz selon l'une des revendications précédentes, **caractérisé en ce que** les parties de sac à gaz (1, 2) sont reliées l'une à l'autre par couture, collage ou rivetage à l'extérieur de l'ouverture d'insertion (3) au moins sectoriellement.

43. Sac à gaz selon l'une des revendications précédentes, **caractérisé en ce que** les parties de sac à gaz (1, 2) sont solidaires l'une à l'autre à l'extérieur de l'ouverture d'insertion (3) au moins sectoriellement.

44. Sac à gaz selon l'une des revendications précédentes, **caractérisé en ce que** les deux languettes (15, 25) présentent chacune au moins une première ouverture de montage (16), les ouvertures de montage (16) étant conçues de façon coïncidente l'une par rapport à l'autre dans un état déployé à plat de l'enveloppe de sac à gaz.

45. Sac à gaz selon l'une des revendications précédentes, **caractérisé en ce que** les deux parties de sac à gaz (1 ,2) présentent chacune une deuxième ouverture de montage (21) à l'extérieur des languettes (15, 25), les ouvertures de montage (21) étant conçues de façon coïncidente l'une par rapport à l'autre dans un état déployé à plat de l'enveloppe de sac à gaz.

46. Sac à gaz selon l'une des revendications précédentes, **caractérisé en ce que** la première languette (15) de la première partie de sac à gaz (1) est posée sur l'autre languette (25) de l'autre partie de sac à gaz (2) pour fermer l'ouverture d'insertion (3).

47. Sac à gaz selon la revendication 45 à 46, **caractérisé en ce que** la au moins une première ouverture de montage (16) de la languette (15) de la première partie de sac à gaz (1) est disposée de façon coïncidente sur la au moins une deuxième ouverture de montage (21) de l'autre partie de sac à gaz (2), de sorte que les deux ouvertures de montage (16, 21) peuvent être traversées par un élément de montage (51) pour fermer l'ouverture d'insertion (3).
